(19) Europäisches Patentamt
European Patent Office
Office européen des brevets

(11) **EP 1 603 259 B1**

(12) **EUROPEAN PATENT SPECIFICATION**

(45) Date of publication and mention
of the grant of the patent:
**28.03.2012 Bulletin 2012/13**

(51) Int Cl.:
*H04J 11/00* (2006.01)   *H04L 5/02* (2006.01)
*H04L 27/26* (2006.01)   *H04L 25/03* (2006.01)
*H04L 25/02* (2006.01)

(21) Application number: **03708493.6**

(22) Date of filing: **05.03.2003**

(86) International application number:
**PCT/JP2003/002565**

(87) International publication number:
**WO 2004/079958 (16.09.2004 Gazette 2004/38)**

(54) **METHOD FOR RECEIVING MULTICARRIER SIGNAL AND MULTICARRIER RECEIVER COMPRISING IT**

VERFAHREN ZUM EMPFANGEN EINES MEHRTRÄGERSIGNALS UND MEHRTRÄGEREMPFÄNGER DAMIT

PROCEDE POUR RECEVOIR UN SIGNAL DE MULTIPORTEUSE ET RECEPTEUR MULTIPORTEUSE COMPRENANT CE SIGNAL

(84) Designated Contracting States:
**DE FR GB**

(43) Date of publication of application:
**07.12.2005 Bulletin 2005/49**

(73) Proprietor: **FUJITSU LIMITED**
**Kawasaki-shi,**
**Kanagawa 211-8588 (JP)**

(72) Inventors:
• **Bocquet, Wladimir,**
**c/o Fujitsu Ltd.**
**Kawasaki-shi, Kanagawa 211-8588 (JP)**

• **Tanaka, Yoshinori,**
**c/o Fujitus Ltd.**
**Kawasaki-shi, Kanagawa 211-8588 (JP)**

(74) Representative: **Gibbs, Christopher Stephen**
**Haseltine Lake LLP**
**Lincoln House, 5th Floor**
**300 High Holborn**
**London WC1V 7JH (GB)**

(56) References cited:
WO-A1-00/38387     JP-A- 8 097 798
JP-A- 8 316 932     JP-A- 2000 299 673
JP-A- 2000 299 674     JP-A- 2002 064 461
JP-A- 2002 111 622     US-A- 5 416 767
US-A1- 2003 023 779

**Description**

TECHNICAL FIELD

The present invention relates to a method of receiving and processing a multi-carrier signal and a multi-carrier reception device employing the method and in particular relates to intersymbol interference equalization of received data in a multi-carrier reception device.

BACKGROUND ART

Techniques that are applied to multi-carrier communications systems include OFDM (Orthogonal Frequency Division Multiplexing) systems as disclosed in Non-patent Reference 1 listed below and MC-CDMA (Code Division Multiple Access) systems.

The OFDM system enables high bit rate transmission to be achieved using a plurality of mutually orthogonal narrow-band carriers.

Specifically, the frequency bandwidth is divided into small ranges and the respective divided ranges are processed using sub-carriers of low bit rate. The sub-carriers are not subject to frequency selective fading, so the multi-carrier modulation system is advantageous in respect of frequency selective fading.

In contrast, in the MC-CDMA system, the CDMA technique is employed for OFDM modulation as a multiple access multiplexing technique. The respective user data are spread in the frequency region using orthogonal spread spectrum code, and are multiplexed with other user data that is spread using a different spread spectrum code.

An outline layout of a transmission device and reception device employing the conventional systems described above is as follows.

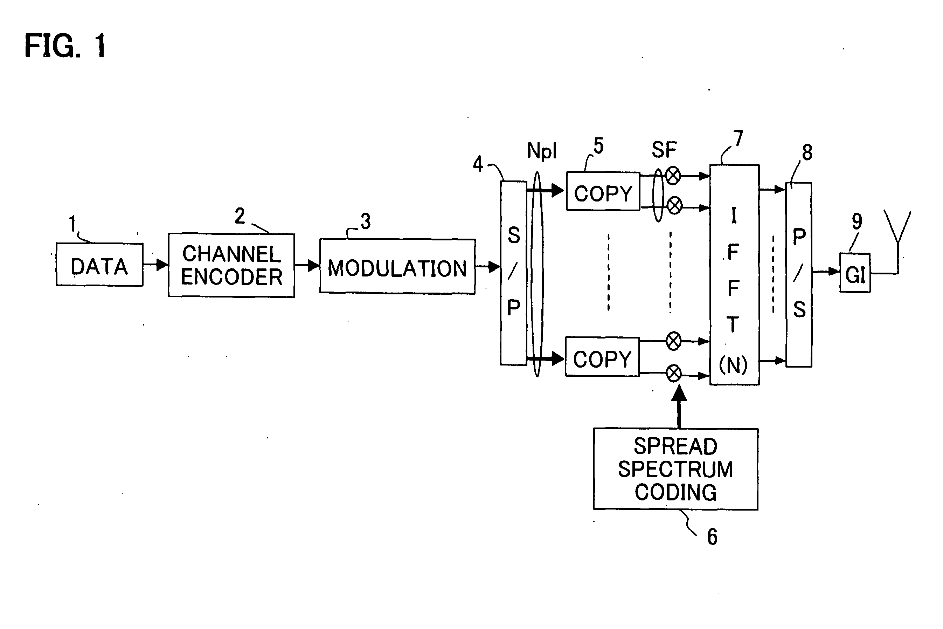

Specifically, Figure 1 is an example of the layout of a MC-CDMA transmission device employing a prior art system as described above, in which a MC-CDMA transmission signal is generated and transmitted.

In Figure 1, binary data 1 is encoded using an encoder 2 of prescribed bit length and is modulated by a modulator 3 using a modulation system such as BPSK, QPSK or 16-QAM corresponding to the encoding. The modulated data is converted to Np1 data symbols using a serial/parallel converter 4.

Np1 data symbols are simultaneously processed, a single data symbol being copied to a data set by a copier 5 using a spreading factor (SF). In this case, the transmission device transmits data using a number Np1*SF of sub-carriers. Data i.e. orthogonal code of length SF is multiplexed by a chip provided for each sub-carrier.

The MC-CDMA transmission device spreads the signal in the frequency region using spreading code 6 and the inverse fast Fourier transformer (IFFT) 7 then performs inverse fast Fourier transformation with a number of dimensions equal to (Np1*SF). These are the main characteristics of an MC-CDMA system.

In addition, the data set is converted to serial data by the parallel/serial converter 8 and, in order to remove intersymbol interference, an insertion section 9 inserts guard intervals GI.

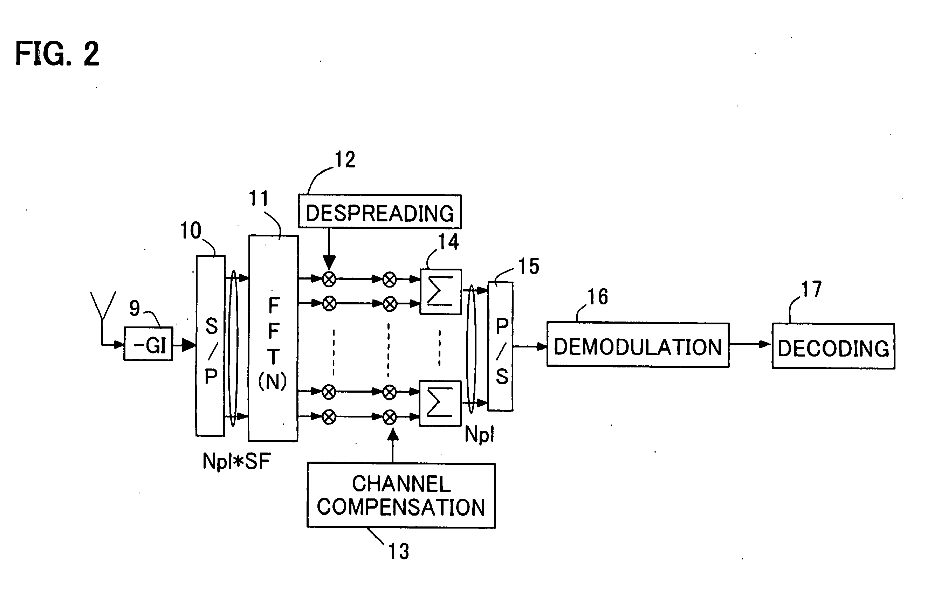

Figure 2 shows the layout of a MC-CDMA reception device corresponding to the MC-CDMA transmission device of Figure 1 using the prior art described above.

In Figure 2, first of all the guard intervals inserted at the transmission end are removed from the reception data by means of a removal section 9. The data from which the guard intervals GI have thus been removed is converted to a parallel signal by means of a serial/parallel converter 10 and subjected to discrete Fourier transformation by a fast Fourier transformer 11. At this point, a channel compensator 13 deduces the channel characteristics of the sub-carriers from pilot symbols.

Next, using a combining method such as for example orthogonal restoring combining (ORC), equal gain combining (EGC), maximum ratio combining (MRC), or minimum mean square error combining (MMSEC), the combining coefficients are multiplied with the output of the fast Fourier transformer 11 and code 12 that is the same as the spread spectrum code at the transmission end is multiplied therewith.

After having been subjected to this channel compensation, the output of the fast Fourier transformer 11 is accumulated in an accumulation section 14 matched with the intervals of the spreading factor (SF) of the frequency region, corresponding to the copying of the data sets in accordance with the spreading factor (SF) at the transmission end. The data symbols specific to a single user are thereby extracted.

In addition, the signals accumulated by the accumulation section 14 are converted to serial signals by a parallel/serial converter 15, demodulated by a demodulator 16 and decoded by a decoder 17.

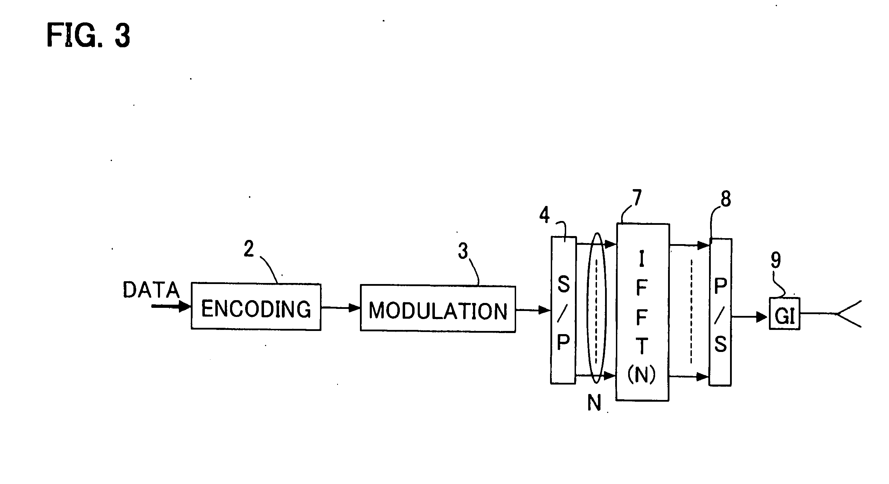

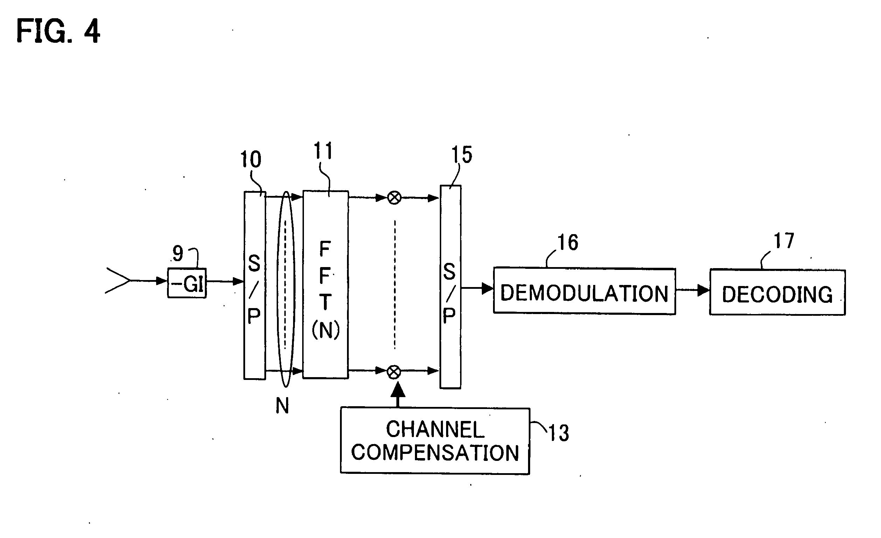

Figure 3 and Figure 4 are respectively examples of the layout of an OFDM transmission device and reception device as employed in the conventional systems described above; they differ from the layout of the MC-CDMA transmission device of Figure 1 in that the spread spectrum processing using spread spectrum code and the inverse spread spectrum processing in the reception device are not performed. The rest of the layout is the same as that of the MC-CDMA transmission device and reception device shown in Figure 1 and Figure 2 so further description thereof is dispensed with.

Non-patent Reference 1

R. Van Nee and R. Prasad, "OFDM For Wireless Multimedia Communications", Artech House Publishers, 2000

US 5416767 (US Philips; Koppelaar et al.) relates to a method of transmitting data by modulating a frequency multiplex of carriers at a relatively low symbol rate, such as in OFDM (orthogonal frequency division multiplex), inter-symbol interference is deliberately introduced at the transmitter side to reduce cross-talk between data of different carriers at the receiver side, such as to simplify an equalizing device in a receiver. The inter-symbol interference at the transmitter side is introduced after the frequency multiplex modulation has taken place, by repeating groups of output symbols produced by an IFFT transformer and subsequently shaping these repeated groups by means of symbol-by-symbol scaling with coefficients constituting a window function. Subsequent shaped and repeated groups of these output symbols mutually overlap.

WO 00/38387 (Ericsson; R Baldemair) discloses a method for transmitting data by a multi-carrier method, e.g. DMT (discrete multitone). The data are combined in a transmitter into blocks having the same number of information symbols (M) and modulated and transmitted by an inverse fast Fourier transformation (IFFT) and demodulated in a receiver by a fast Fourier transform (FFT). An equalising guard interval in the receiver is co-transmitted and fitted into the transmitter between the respective blocks. The guard interval is greater than or equal to the memory length of the transmission channel and is transmitted without any signals or prefix; demodulation is carried out in the receiver by means of fast Fourier transformation (FFT) with a length L greater than or equal to the sum of the information block length (M) and the length (P) of the guard interval.

## DISCLOSURE OF THE INVENTION

In the prior art example described above, the OFDM transmission system is effective in regard to multi-path propagation and circuit distortion, but, in the extreme case, the maximum propagation delay becomes greater than the length of the guard intervals GI and, in the case where an adjacent symbol is affected by a preceding symbol i.e. in the case where intersymbol interference (ISI) occurs, is insufficient.

An object of the present invention is therefore to provide a multi-carrier reception processing method that avoids such problems and a multi-carrier reception device using this.

The invention provides a method as defined in claim 1, and an apparatus according to claim 9.

Channel equalization can be performed by multiplying the multi-carrier signal by equalization coefficients; the channel distortion effect of the received multi-carrier signal in the frequency region is thereby reduced.

Orthogonal frequency division multiplexing, or multi-carrier code division multiple access, can be employed in the multi-carrier system.

In embodiments, the received multi-carrier signal does not need to include guard intervals between adjacent symbol frames.

The estimated value of the channel response with respect to the discrete Fourier transform output for each channel can be found by interpolation of estimated values of reduced dimensions.

Further characteristics of the present invention will become clear from the embodiments of the invention described below with reference to the drawings.

## BRIEF DESCRIPTION OF THE DRAWINGS

Figure 1 is an example layout of a MC-CDMA transmission device employing a prior art system;

Figure 2 is an example layout of a MC-CDMA reception device corresponding to the MC-CDMA transmission device of Figure 1;

Figure 3 is an example layout of an OFDM transmission device employing a prior art system;

Figure 4 is an example layout of an OFDM reception device employing a prior art system;

Figure 5 is a block diagram of an example layout of an OFDM reception device according to the present invention;

Figure 6 is a flow chart given in explanation of the flow of processing corresponding to the example layout of an OFDM reception device according to Figure 5;

Figure 7 is an example layout of a transformation matrix 111;

Figure 8 is a view showing the layout of 2 N linked point clusters in the case where guard intervals are present;

Figure 9 is a view showing a frame layout in the case where a pilot symbol is inserted in a transmission frame in a transmission device;

Figure 10 is a view showing the layout of an embodiment of a reception device in the case of MC-CDMA when guard intervals are not employed;

Figure 11 is a view showing the layout of an embodiment of a 2 N fast Fourier transformer (FFT) in the reception device layout of Figure 10; and

Figure 12 shows the layout of an embodiment of a fast Fourier transformer (FFT) 110 in the case where the principle of 2 N dimensions fast Fourier transformation is further extended to 4 N dimensions.

## DESCRIPTION OF THE PREFERRED EMBODIMENTS

Embodiments of the present invention are described below with reference to the drawings.

In application of a multi-carrier reception device according to the present invention, the corresponding transmission device that is employed may have a layout as in the prior art layout shown in Figure 1 and Figure 3. Furthermore, as will be described later, as the multi-carrier reception device according to the present invention, a reception device may be employed that is capable of being applied also to reception of signals in which no guard intervals GI are inserted at the transmission end.

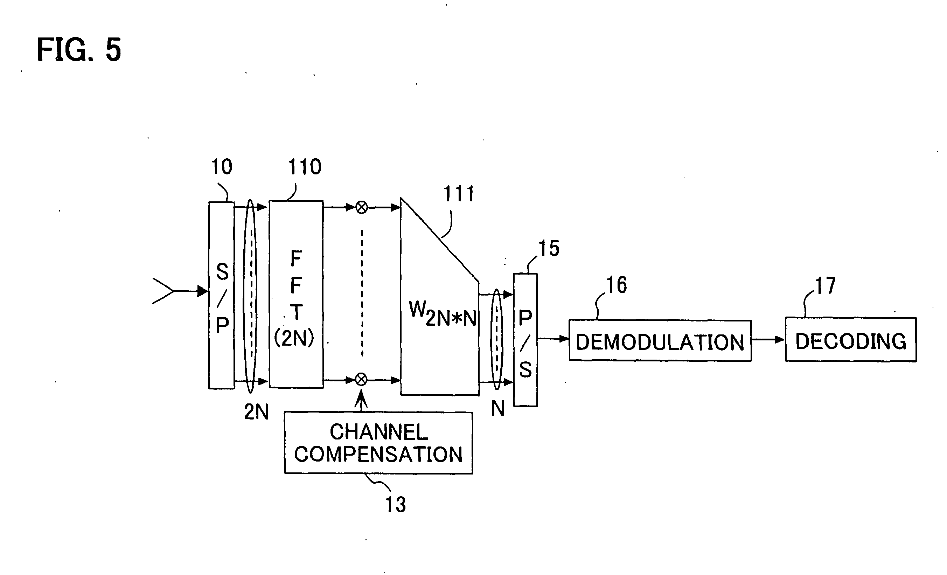

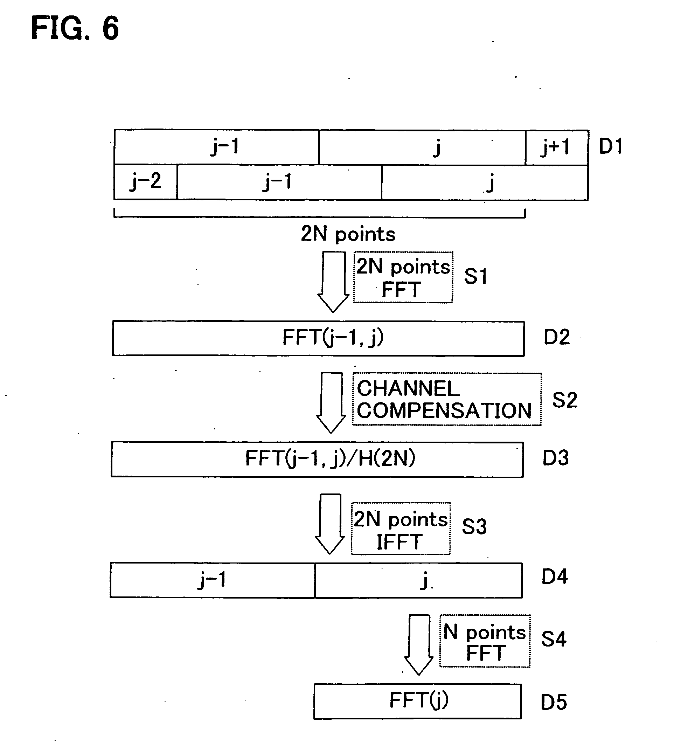

Figure 5 is a block diagram of an example layout of an OFDM reception device according to the present invention. Figure 6 is a flow chart given in explanation of the flow of processing corresponding to the example layout of the OFDM reception device of Figure 5; an outline of the necessary processing for equalization compensation of channel distortion, omitting the intersymbol interference (ISI) portion, is shown.

It should be noted that, in the description below, the OFDM symbol length N is assumed to be much longer than the maximum amount of delay (expressed by $\tau_{max}$) from the channel model.

In Figure 5, the received signal train is first of all converted to a parallel signal by the serial/parallel converter 10. According to a characteristic feature of the present invention, as an embodiment, 2 N data symbols are found from this parallel signal using a window (j-1, j) of size 2 N points, from two continuous symbol frames (see D1, Figure 6).

Figure 6 shows how 2 N data symbols are successively found from two continuous symbol frames. Specifically, this Figure shows how 2 N data symbols are found from the (j-1)-th OFDM symbol frame and the j-th OFDM symbol frame and how 2 N data symbols are found from the j-th OFDM symbol frame and the (j+1)-th OFDM symbol frame.

When complete synchronization is achieved, only the two symbols of timing $i$ and $i$-1 are subjected to data processing in the interval $[iN; (i+1)N]$.

Discrete Fourier transformation of such 2 N data symbols is performed (step S1) by fast Fourier transformation processing performed by a 2 N point fast Fourier transformer 110, the construction of an embodiment of which is described later.

Next, channel compensation is performed by a distortion compensator 13 on the data (D2) that has been subjected to discrete Fourier transformation, in respect of each sub-carrier, in order to decrease channel distortion (step S2). After this, the dimensions of the signal are reduced using a special transformation matrix 111, prior to demodulation using a demodulator 16.

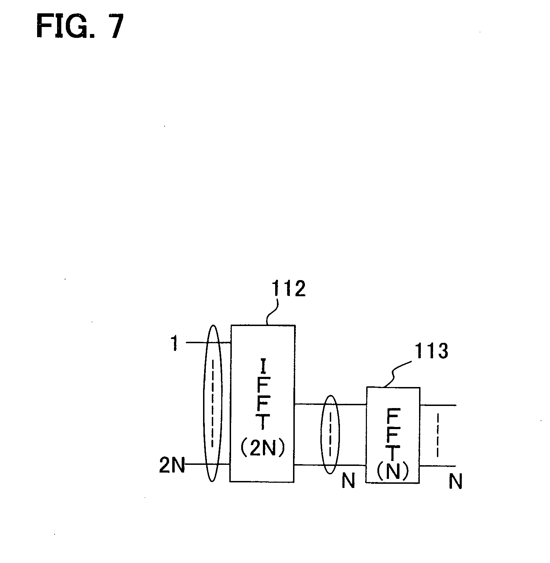

Figure 7 shows an example layout of this transformation matrix 111. As an embodiment, this comprises an inverse fast Fourier transformer (IFFT) 112 in respect of the 2 N points and a second FFT 113 that, of the transformation processing output of the IFFT 112, performs discrete Fourier transformation in respect of the subordinate N points.

The inverse fast Fourier transformer (IFFT) 112 performs (step S3) inverse discrete Fourier transformation using inverse fast Fourier transformation on the channel-compensated data (D3). Next, of the inverse discrete Fourier transformed data D4, discrete Fourier transformed data D5 is obtained by performing a discrete Fourier transformation (step S4) using the FFT 113, solely in respect of N points. In this way, the 2 N dimensions of the reception data are reduced to N dimensions.

Next, in Figure 5, the reception data of N dimensions is converted to a serial signal by the parallel/serial converter 15 and is then subjected to demodulation using a demodulator 6 corresponding to the modulator 3 (see Figure 1) at the transmission end and decoding using a decoder 17 corresponding to the channel encoder 2.

Summarizing the above processing performed by the reception device, the principle of the present invention is that, in order to reduce the effect of intersymbol interference (ISI), the length on which fast Fourier transformation i.e. discrete Fourier transformation is performed is extended. In a multi-carrier reception device, the effect of the preceding OFDM symbol can be moderated by finding the 2 N point fast Fourier transform (FFT).

Further description of the processing in an OFDM reception device will now be given using numerical equations, in order to substantiate the utility of the present invention. It should be noted that although, hereinbelow, a description is given of the case where no guard intervals GI are inserted, subsequent application of the present invention is possible whether guard intervals GI are inserted or not.

In application of the present invention, the OFDM symbol length is assumed to be much larger than the amount of delay spreading, so only the residual portions of the received signals represent a combination of two continuous transmission symbols.

In this case, the reception signal $r_k^{(i)}$ is represented as the following expression 1.

$$r_k^{(i)} = \begin{cases} \sum_{p=0}^{P-1} h_p x_{k-\tau_p}^{(i)} + \sum_{p=P}^{P_{Max}-1} h_p x_{N-\tau_p+k}^{(i-1)} + \widetilde{n}_k^{(i)} & \forall 0 \leq k < \tau_{P_{Max}} \\ \sum_{p=0}^{P_{Max}-1} h_p x_{k-\tau_p}^{(i)} + \widetilde{n}_k^{(i)} & \forall \tau_{P_{Max}} \leq k < N \end{cases} \quad (1)$$

As described above, the basis of the present invention is that intersymbol interference is moderated by equalization using extension of the discrete Fourier transformation length instead of canceling intersymbol interference.

If a symbol of the received signal is $\vec{r}^{(i)} = \left[ r_0^{(i)} \dots\dots r_k^{(i)} \dots\dots r_{N-1}^{(i)} \right]^T$ the signal of two continuous symbol frames is expressed by $\vec{y}^{(i)} = [\vec{r}^{(i-1))} \, \vec{r}^{(i)}]$

In order to clarify the description, the description will be given dividing the processing of the constituent portions of the multi-carrier reception device according to the present invention into three steps.

First step [extended discrete Fourier transform (discrete Fourier transform) calculation]

From the signal $\vec{y}^{(i)} = [\vec{r}^{(i-1))} \, \vec{r}^{(i)}]$ of two continuous symbol frames,

$$Y_m^{(i)} = \beta \sum_{k=0}^{2.N-1} y_k^{(i)} . e^{-j\frac{\pi}{N}.k.m}$$

i.e.

$$Y_m^{(i)} = \beta \sum_{k=0}^{N-1} r_k^{(i-1)} . e^{-j\frac{\pi}{N}.k.m} + \beta \sum_{k=N}^{2.N-1} r_{k-N}^{(i)} . e^{-j\frac{\pi}{N}.k.m} \quad (2)$$

is obtained.

furthermore, by combining expression 1 and expression 2, $\vec{Y}^{(i)} = \overline{\overline{H}}_{2N*2N}.[\vec{X}^{(i-1)} \, \vec{X}^{(i)}]$ is obtained, where

$$\vec{Y}^{(i)} = \left[ Y_0^{(i)} \dots\dots\dots Y_{2N-1}^{(i)} \right], \quad \vec{X}^{(i)} = \left[ X_0^{(i)} \dots\dots X_{N-1}^{(i)} \right]$$

and $\overline{\overline{H}}_{2N*2N}$ is the response of the channels of 2 N dimensions in the frequency region.

Second step (channel distortion compensation)

Let us assume that the matrix representation of the channel equalization coefficient is $\overline{\overline{G}}_{2N*2N}$.
Since the reception device estimates that there is no carrier-correlated interference, $\overline{\overline{G}}_{2N*2N}$ is a diagonal matrix constituted by complex numbers.
The channel distortion compensation is expressed as follows in the frequency region.

$$\vec{V}^{(i)} = \overline{\overline{G}}_{2N*2N}.\vec{Y}^{(i)}$$

Consequently, $\vec{V}^{(i)} = \overline{\overline{G}}_{2N*2N}.\overline{\overline{H}}_{2N*2N}.[\vec{X}^{(i-1)}\ \vec{X}^{(i)}]$

<u>Third step</u> (reducing the data dimensions)

After channel distortion compensation, reduction of the data dimensions in the frequency region is necessary in order to equalize the dimensions with the dimensions of the reception data.
In order to implement this, the 2 N point signal is transformed to an N point signal stream by a special transformation matrix (transformation matrix 111 shown in Figure 5).

The transformation matrix 111 is set as $\overline{\overline{W}}_{2N\bullet N} = \left[w_{p,k}\right]_{\substack{0 \le p < N \\ 0 \le k < 2N}}$ where $\beta$ is a normalization coefficient

$$w_{p,k} = \beta \sum_{m=0}^{N-1} e^{-j\frac{2\pi}{N}p.m}.e^{j\frac{2\pi}{2N}(m+N).k}$$

When this expression is simplified, it becomes

$$w_{p,k} = \begin{cases} \beta.(-1)^k & if\ \dfrac{k}{2} - p = 0 \\[2em] \beta.(-1)^k.\dfrac{1 - e^{j.2\pi\left(\frac{k}{2}-p\right)}}{1 - e^{j\frac{2\pi}{N}\left(\frac{k}{2}-p\right)}} & if\ \dfrac{k}{2} - p \ne 0 \end{cases} \qquad (3)$$

The reception data found by processing using the above transformation matrix 111 is

$$\hat{\vec{X}}^{(i)} = \overline{\overline{W}}_{2N\bullet N}.\vec{V}^{(i)}$$

where, if guard intervals G1 are present, the selection of symbol blocks must be specified such that continuity between samples is maintained (i.e. orthogonality in the frequency region).

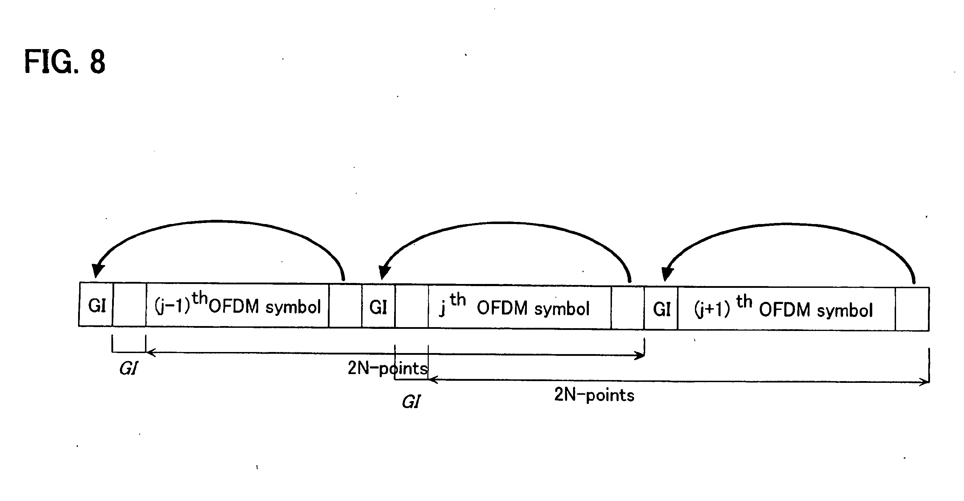

Figure 8 is a view showing a 2 N continuous point cluster arrangement in the case where guard intervals GI are present. The thick arrows in the Figure indicate the arrangement of the guard intervals GI. 2 N points are obtained by combining the (j-1)-th OFDM symbol frame and the (j)-th OFDM symbol frame. A further 2 N points are obtained by combining the (j)-th OFDM symbol frame and the (j+1)-th OFDM symbol frame.
Next, the layout of an embodiment in a multi-carrier reception device to which the basic layout of the present invention as described above is applied is described.
First embodiment (estimation of channel response in respect of OFDM modulation system not having guard intervals GI):
In order to correctly estimate the channel response (circuit characteristics) in an N point frequency region, it is possible to multiplex pilot symbols with the transmission data in the transmission device.

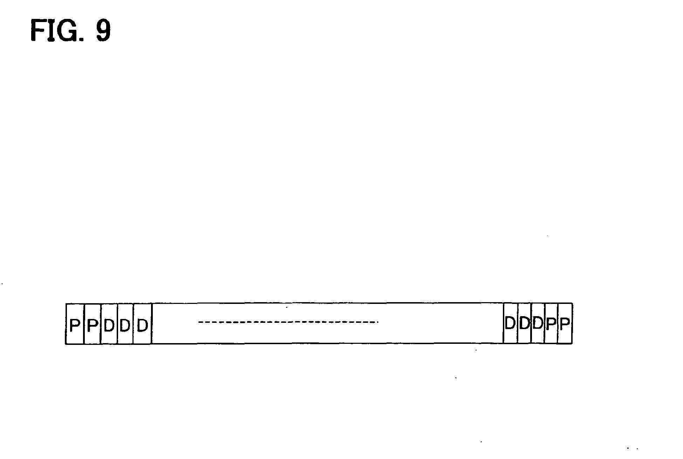

Figure 9 shows an example of a frame in such a case. Specifically, the two OFDM symbols (represented by P) of the head and the tail of each frame are pilot symbols recognized at the reception end.

In order to estimate the channel response in the frequency region at the reception device, first of all, the channel compensation circuit 13 effects conversion to signals of the frequency region using N point fast Fourier transformation. It then estimates the channel response in respect of each sub-carrier for compensation of distortion, using the pilot symbols.

The compensation coefficients based on the estimated channel response are then multiplied with the outputs of the 2 N dimensional fast Fourier transformer 110.

However, in this case, over-sampling of the channel response corresponding to the layout of the present invention whereby the 2 N point channel response is obtained is necessary. However, different methods may also be used. For example, a 2 N point channel response can be obtained by averaging from the estimated values obtained by interpolation as described next i.e. with N dimensions.

Specifically, in the frequency region, taking the channel response in respect of the N dimensions as $h_m$ and taking the channel response in respect of the 2 N dimensions as $g_m$, these may be expressed by the following expression 4.

$$\begin{cases} g_{2m} = h_m & 0 \le m < N \\ g_{2m-1} = \dfrac{h_{m-1} + h_m}{2} & 1 \le m < N \end{cases} \qquad (4)$$

A more specific description will now be given. Taking the reception signal as Y, taking into account the channel response, the reception signal Y may be expressed as follows with respect to the sub-carriers in the frequency region:

$$Y = H \cdot X + N$$

where H is the channel distortion, X is the transmission signal and N is noise.

In the time region, this may be equivalently represented as follows.

$$y = h * x + n$$

where y, h, x and n are respectively the reception signal in the time region, the channel distortion, the transmission signal and noise. Also, * is a convolution operator.

The pilot series is subjected to inverse fast Fourier transformation at the transmission end and is received through a circuit (channel) at the reception end, where the corresponding fast Fourier transformation is performed. Taking the pilot series that is multiplexed with the data as being X1 in the transmission region, the channel response H1 is estimated by the following expression:

$$H1 = Y / X1$$

The channel response in respect of the 2 N point frequency region can therefore be obtained (see expression 4 or above) by interpolation. Finally, the compensation coefficients in respect of the various sub-carriers can be found from the estimated values of the channel response.

Second embodiment (MA/CDMA with no guard intervals):

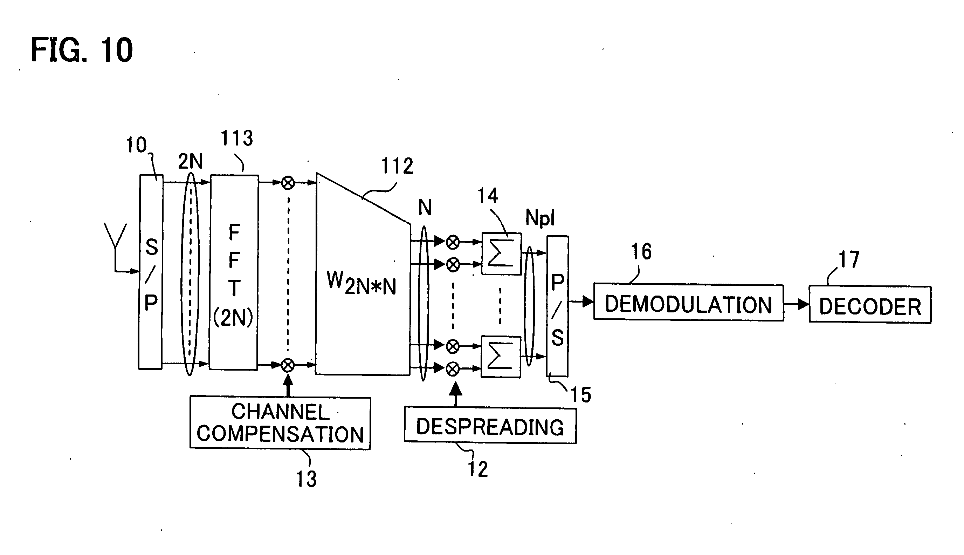

An embodiment of the layout of a reception device constituting a multi-carrier reception device according to the present invention in the case of MC-CDMA accompanying channel encoding and in which no guard intervals are employed is shown in Figure 10. The prior art layout (Figure 1) may be employed at the transmission device end.

As described above, equalization processing is performed in three steps.

Specifically, first of all, the fast Fourier transformer (FFT) 110 performs 2 N dimensional discrete Fourier transformation of length longer than a single MC-CDMA symbol on the FFT reception signal. Next, the channel compensator 13 multiplies the output of the FFT transformer 110 by the equalization coefficients found from the channel estimated values.

Next, after equalization, using the transformation matrix 111 indicated in expression 3 given above, the dimensions of the signal are made equal to the N dimensions of the received MC-CDMA symbols.

Finally, specific data symbols of a single user are extracted by accumulating in an accumulator 14 data that has been despread by despreading code 12, over the SF chip interval in the frequency region.

Third embodiment (fast Fourier transform of length longer than N in respect of OFDM modulation, without guard intervals):

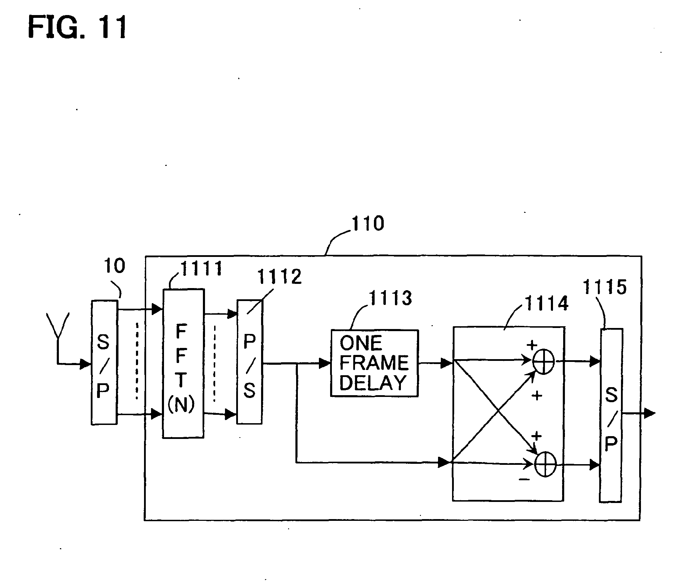

The layout of an embodiment of the 2 N fast Fourier transformer (FFT) 110 in the reception device layout of Figure 10 is shown in Figure 11.

Reception data is converted to a parallel signal by the serial/parallel converter 10 and N point discrete Fourier transformation is then performed on N points by a fast Fourier transformer 1111. A serial data series is then obtained by a parallel/serial converter 112 in respect of these data that have been subjected to transformation processing.

Furthermore, in order to calculate a 2 N point discrete Fourier transform, two continuous data series are obtained using a butterfly pattern (isomorphic mapping) 1114. Specifically, the output of the fast Fourier transformer 1111 is directly output together with the output of the fast Fourier transformer 1111 to which a delay of one frame has been added by a delay element 1113, to the butterfly pattern (isomorphic mapping) 1114.

In this way, it is possible to synchronise two continuous sets of reception data. The two outputs of the butterfly pattern (isomorphic mapping) 1114 are then converted to parallel by a serial/parallel converter 1115 and output.

Although, in the above description, the case was illustrated of performing discrete Fourier transformation on 2 N points in respect of two frames, application of the present invention is not restricted to this and in fact further extension is possible to employ a larger number of continuous frames.

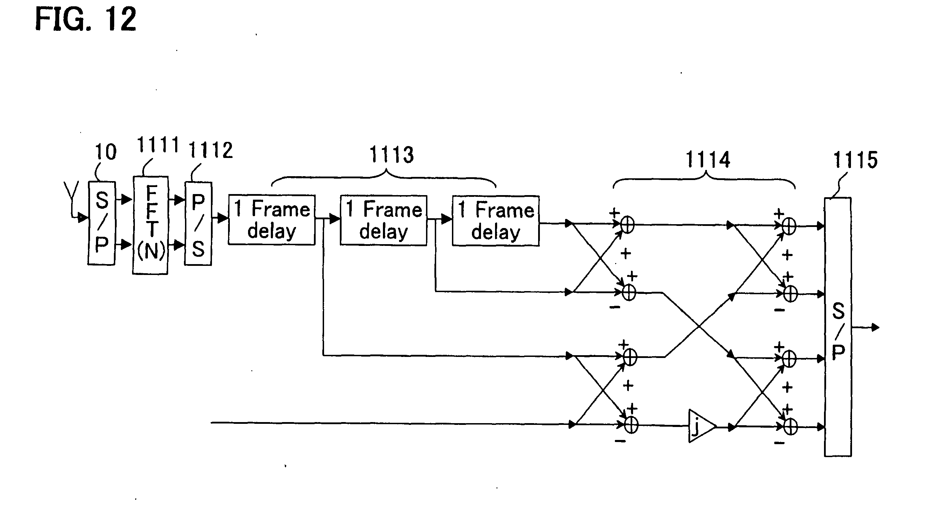

Figure 12 shows the layout of an embodiment of the fast Fourier transformer (FFT) 110 in such a case of extension to 4 N dimensions. The butterfly pattern 1114 is implemented by performing synchronization by delay of three frames, performed by the frame delay element 1113. The portion indicated by j in the butterfly pattern 1114 of Figure 12 indicates the square root of "-1".

It should be noted that the transformer 111 corresponding to the fast Fourier transformer (FFT) 110 of Figure 12 needs to have a matrix of W4N*N so as to provide 4 N inputs.

## INDUSTRIAL APPLICABILITY

As described above, according to the present invention, it is possible to provide a multi-carrier reception device wherein guard intervals are unnecessary and in which the effect of intersymbol interference (ISI) due to the length of the guard intervals can be avoided.

**Claims**

1. A method of reception processing of a multi-carrier signal comprising the steps of:

   receiving a multi-carrier signal having N data symbols for each frame in a multi-carrier communications system (D1);
   selecting a multi-carrier signal of 2N data symbols from said received multicarrier signal (S1);
   performing discrete Fourier transformation on said selected multi-carrier signal of 2N data symbols (D2, 110);
   performing channel equalization on each sub-carrier of said discrete Fourier-transformed signal to decrease channel distortion (S2, 13);
   **characterising by** the step of reducing the dimensions of said channel equalized signal to the dimensions of said received multi-carrier signal by a transformation matrix (111) comprising a first transformer (112) that performs inverse discrete Fourier transformation on the channel-equalised signal for 2N data symbols and a second transformer (113) that performs discrete Fourier transformation on N data symbols of the output from the first transformer (112).

2. A method of reception processing of a multi-carrier signal according to claim 1, wherein the selection of said multi-carrier signal of 2N data symbols is performed in order to execute discrete Fourier transformation of length longer than the dimensions of said received multi-carrier signal.

3. A method of reception processing of a multi-carrier signal according to claim 1, wherein said equalization is conducted by multiplying equalization coefficients by the multi-carrier signal so as to reduce the channel distortion effect of said received multi-carrier signal in the frequency region.

4. A method of reception processing of a multi-carrier signal according to claim 1, wherein orthogonal frequency division multiplexing is employed in the multi-carrier communications system.

5. A method of reception processing of a multi-carrier signal according to claim 1, wherein multi-carrier code division multiple access is employed in said multi-carrier communications system.

6. A method of reception processing of a multi-carrier signal according to any of claims 1 to 5, wherein said received multi-carrier signal does not include guard intervals between adjacent symbol frames.

7. A method of reception processing of a multi-carrier signal according to claim 2, wherein the discrete Fourier transformation of length longer than the dimensions of the multi-carrier signal is of a length which is an integral multiple of the dimensions of said multi-carrier signal.

8. A method of reception processing of a multi-carrier signal according to claim 7, wherein the estimated value of the channel response with respect to said discrete Fourier transformed output of each channel is found by interpolating estimated values of reduced dimensions.

9. A reception device for a multi-carrier signal in a multi-carrier system, comprising:

   a serial/parallel converter (10) that receives a multi-carrier signal and converts it to a parallel signal;
   a means for finding 2N data symbols from the converted parallel signal;
   a Fourier transformer (110) that performs discrete Fourier transformation on said found 2N data symbols from the multi-carrier signal;
   a channel compensator (13) that performs channel equalization on said discrete Fourier-transformed signal;
   a matrix transformer (111) including a first transformer (112) that performs inverse discrete Fourier transformations on the channel-equalized signal for 2N data symbols and a second transformer (113) that performs discrete Fourier transformation on N data symbols of the output from the first transformer (112), so that the dimensions of said channel-equalized signal are reduced to the dimensions of said received multi-carrier signal;
   a parallel/serial converter (15) that converts the output of said matrix transformer (11) to a serial signal; and
   a demodulator (16) corresponding to the modulator and a decoder (17) corresponding to the encoder at the transmission device side for the output of said parallel/serial converter (15).

10. A reception device for a multi-carrier signal according to claim 9, wherein the length of the discrete Fourier transformation in said Fourier transformer corresponds to the length of said selected multi-carrier signal 2N data symbols.

11. A reception device for a multi-carrier signal according to claim 9, wherein the channel equalization performed by said channel compensator is conducted by multiplying equalization coefficients by the multi-carrier signal and thereby reducing the channel distortion effect of said received multi-carrier signal in the frequency region.

12. A reception device for a multi-carrier signal according to claim 9, wherein orthogonal frequency division multiplexing is employed in said multi-carrier system.

13. A reception device for a multi-carrier signal according to claim 9, wherein multi-carrier code division multiple access is employed in said multi-carrier system.

14. A reception device for a multi-carrier signal to according to any of claims 9 to 13, wherein said received multi-carrier signal does not contain guard intervals between adjacent symbol frames.

15. A reception device for a multi-carrier signal according to claim 9, wherein the discrete Fourier transformation of length longer than the dimensions of the multi-carrier signal is of length which is an integral multiple of the dimensions of said multi-carrier signal.

16. A reception device for a multi-carrier signal according to claim 15, wherein the estimated values of the channel response with respect to said discrete Fourier transformed output of each channel are found by interpolation of estimated values of reduced dimensions.

**EP 1 603 259 B1**

**Patentansprüche**

1. Verfahren zur Empfangsverarbeitung eines Mehrträgersignals, das die Schritte umfasst:

   Empfangen eines Mehrträgersignals, das N Datensymbole für jeden Rahmen hat, in einem Mehrträgerkommunikationssystem (D1);
   Selektieren eines Mehrträgersignals mit 2N Datensymbolen von dem empfangenen Mehrträgersignal (S1);
   Ausführen einer diskreten Fourier-Transformation an dem selektierten Mehrträgersignal mit 2N Datensymbolen (D2, 110);
   Ausführen einer Kanalentzerrung an jedem Subträger des der diskreten Fourier-Transformation unterzogenen Signals, um die Kanalverzerrung (S2, 13) zu verringern;
   **gekennzeichnet durch** den Schritt zum Reduzieren der Dimensionen des kanalentzerrten Signals auf die Dimensionen des empfangenen Mehrträgersignals **durch** eine Transformationsmatrix (111), die einen ersten Transformierer (112) umfasst, der eine inverse diskrete Fourier-Transformation an dem kanalentzerrten Signal für 2N Datensymbole ausführt, und einen zweiten Transformierer (113), der eine diskrete Fourier-Transformation an N Datensymbolen der Ausgabe von dem ersten Transformierer (112) ausführt.

2. Verfahren zur Empfangsverarbeitung eines Mehrträgersignals nach Anspruch 1, bei dem die Selektion des Mehrträgersignals mit 2N Datensymbolen durchgeführt wird, um die diskrete Fourier-Transformation mit einer Länge auszuführen, die länger als die Dimensionen des empfangenen Mehrträgersignals ist.

3. Verfahren zur Empfangsverarbeitung eines Mehrträgersignals nach Anspruch 1, bei dem die Entzerrung durch Multiplizieren von Entzerrungskoeffizienten mit dem Mehrträgersignal ausgeführt wird, um den Kanalverzerrungseffekt des empfangenen Mehrträgersignals in der Frequenzregion zu reduzieren.

4. Verfahren zur Empfangsverarbeitung eines Mehrträgersignals nach Anspruch 1, bei dem in dem Mehrträgerkommunikationssystem eine orthogonale Frequenzmultiplexierung zum Einsatz kommt.

5. Verfahren zur Empfangsverarbeitung eines Mehrträgersignals nach Anspruch 1, bei dem in dem Mehrträgerkommunikationssystem ein Mehrträger-Codevielfachzugriff zum Einsatz kommt.

6. Verfahren zur Empfangsverarbeitung eines Mehrträgersignals nach einem der Ansprüche 1 bis 5, bei dem das empfangene Mehrträgersignal zwischen benachbarten Symbolrahmen keine Schutzintervalle enthält.

7. Verfahren zur Empfangsverarbeitung eines Mehrträgersignals nach Anspruch 2, bei dem die diskrete Fourier-Transformation mit einer Länge, die länger als die Dimensionen des Mehrträgersignals ist, eine Länge hat, die ein ganzzahliges Vielfaches der Dimensionen des Mehrträgersignals beträgt.

8. Verfahren zur Empfangsverarbeitung eines Mehrträgersignals nach Anspruch 7, bei dem der Schätzwert der Kanalantwort hinsichtlich einer Ausgabe der diskreten Fourier-Transformation jedes Kanals durch Interpolieren von Schätzwerten von reduzierten Dimensionen ermittelt wird.

9. Empfangsvorrichtung für ein Mehrträgersignal in einem Mehrträgersystem, umfassend:

   einen Seriell/Parallel-Konverter (10), der ein Mehrträgersignal empfängt und es in ein paralleles Signal konvertiert;
   ein Mittel zum Ermitteln von 2N Datensymbolen von dem konvertierten parallelen Signal;
   einen Fourier-Transformierer (110), der eine diskrete Fourier-Transformation an den ermittelten 2N Datensymbolen von dem Mehrträgersignal ausführt;
   einen Kanalkompensator (13), der eine Kanalentzerrung an dem der diskreten Fourier-Transformation unterzogenen Signal ausführt;
   einen Matrix-Transformierer (111), der einen ersten Transformierer (112) umfasst, der inverse diskrete Fourier-Transformationen an dem kanalentzerrten Signal für 2N Datensymbole ausführt, und einen zweiten Transformierer (113), der eine diskrete Fourier-Transformation an N Datensymbolen der Ausgabe von dem ersten Transformierer (112) ausführt, so dass die Dimensionen des kanalentzerrten Signals auf die Dimensionen des empfangenen Mehrträgersignals reduziert werden;
   einen Parallel/Seriell-Konverter (15), der die Ausgabe des Matrix-Transformierers (111) in ein serielles Signal konvertiert; und

einen Demodulator (16) entsprechend dem Modulator und einen Decodierer (17) entsprechend dem Codierer auf der Sendevorrichtungsseite für die Ausgabe des Parallel/Seriell-Konverters (15).

10. Empfangsvorrichtung für ein Mehrträgersignal nach Anspruch 9, bei der die Länge der diskreten Fourier-Transformation in dem Fourier-Transformierer der Länge der 2N Datensymbole des selektierten Mehrträgersignals entspricht.

11. Empfangsvorrichtung für ein Mehrträgersignal nach Anspruch 9, bei der die durch den Kanalkompensator ausgeführte Kanalentzerrung durch Multiplizieren von Entzerrungskoeffizienten mit dem Mehrträgersignal durchgeführt wird und **dadurch** der Kanalverzerrungseffekt des empfangenen Mehrträgersignals in der Frequenzregion reduziert wird.

12. Empfangsvorrichtung für ein Mehrträgersignal nach Anspruch 9, bei der in dem Mehrträgersystem eine orthogonale Frequenzmultiplexierung zum Einsatz kommt.

13. Empfangsvorrichtung für ein Mehrträgersignal nach Anspruch 9, bei der in dem Mehrträgersystem ein Mehrträger-Codevielfachzugriff zum Einsatz kommt.

14. Empfangsvorrichtung für ein Mehrträgersignal nach einem der Ansprüche 9 bis 13, bei der das empfangene Mehrträgersignal zwischen benachbarten Symbolrahmen keine Schutzintervalle enthält.

15. Empfangsvorrichtung für ein Mehrträgersignal nach Anspruch 9, bei der die diskrete Fourier-Transformation mit einer Länge, die länger als die Dimensionen des Mehrträgersignals ist, eine Länge hat, die ein ganzzahliges Vielfaches der Dimensionen des Mehrträgersignals beträgt.

16. Empfangsvorrichtung für ein Mehrträgersignal nach Anspruch 15, bei der die Schätzwerte der Kanalantwort hinsichtlich einer Ausgabe der diskreten Fourier-Transformation jedes Kanals durch Interpolieren von Schätzwerten von reduzierten Dimensionen ermittelt werden.

**Revendications**

1. Procédé de traitement de réception d'un signal multi-porteuse, comprenant les étapes consistant à :

recevoir un signal multi-porteuse comportant N symboles de données pour chaque trame d'un signal de communication multi-porteuse (D1) ;
sélectionner un signal multi-porteuse de 2N symboles de données à partir dudit signal multi-porteuse reçu (S1) ;
effectuer une transformation de Fourier discrète sur ledit signal multi-porteuse sélectionné de 2N symboles de données (D2, 110) ;
effectuer une égalisation de voie sur chaque sous-porteuse dudit signal ayant fait l'objet de la transformation de Fourier discrète pour diminuer la distorsion de voie (S2, 13) ;
**caractérisée par** l'étape de réduction des dimensions dudit signal dont les voies ont été égalisées jusqu'aux dimensions dudit signal multi-porteuse reçu au moyen d'une matrice de transformation (111) comprenant un premier transformateur (112) effectuant une transformation de Fourier discrète inverse sur le signal dont les voies ont été égalisées pour 2N symboles de données et un deuxième transformateur (113) effectuant une transformation de Fourier discrète sur N symboles de données de la sortie du premier transformateur (112).

2. Procédé de traitement de réception d'un signal multi-porteuse selon la revendication 1, dans lequel la sélection dudit signal multi-porteuse de 2N symboles de données est effectuée afin d'exécuter une transformation de Fourier discrète d'une longueur supérieure aux dimensions dudit signal multi-porteuse reçu.

3. Procédé de traitement de réception d'un signal multi-porteuse selon la revendication 1, dans lequel ladite égalisation est effectuée en multipliant des coefficients d'égalisation par le signal multi-porteuse de façon à diminuer l'effet de distorsion de voie dudit signal multi-porteuse reçu dans la région des fréquences.

4. Procédé de traitement de réception d'un signal multi-porteuse selon la revendication 1, dans lequel on utilise un multiplexage par répartition orthogonale de la fréquence dans le système de communication multi-porteuse.

**5.** Procédé de traitement de réception d'un signal multi-porteuse selon la revendication 1, dans lequel on utilise un accès multiple par répartition en code multi-porteuse dans ledit système de communication multi-porteuse.

**6.** Procédé de traitement de réception d'un signal multi-porteuse selon l'une quelconque des revendications 1 à 5, dans lequel ledit signal multi-porteuse reçu ne comporte pas d'intervalles de protection entre des trames de symboles adjacentes.

**7.** Procédé de traitement de réception d'un signal multi-porteuse selon la revendication 2, dans lequel la transformation de Fourier discrète d'une longueur supérieure aux dimensions du signal multi-porteuse est d'une longueur qui est un multiple entier des dimensions dudit signal multi-porteuse.

**8.** Procédé de traitement de réception d'un signal multi-porteuse selon la revendication 7, dans lequel on trouve la valeur estimée de la réponse de voie par rapport à ladite sortie ayant fait l'objet d'une transformation de Fourier discrète de chaque voie en interpolant les valeurs estimées de dimensions réduites.

**9.** Dispositif de réception pour un signal multi-porteuse dans un système multi-porteuse, comprenant :

un convertisseur série/parallèle (10) qui reçoit un signal multi-porteuse et le convertit en un signal parallèle ;
un moyen pour rechercher 2N symboles de données dans le signal parallèle converti ;
un transformateur de Fourier (110) effectuant une transformation de Fourier discrète sur lesdits 2N symboles de données trouvés à partir du signal multi-porteuse ;
un compensateur de voie (13) effectuant une égalisation de voie sur ledit signal ayant fait l'objet de la transformation de Fourier discrète ;
un transformateur matriciel (111) comprenant un premier transformateur (112) effectuant une transformation de Fourier discrète inverse sur le signal dont les voies ont été égalisées pour 2N symboles de données et un deuxième transformateur (113) effectuant une transformation de Fourier discrète sur N symboles de données de la sortie du premier transformateur (112), de façon que les dimensions dudit signal dont les voies ont été égalisées soient réduites aux dimensions dudit signal multi-porteuse reçu ;
un convertisseur parallèle/série (15) qui convertit la sortie dudit transformateur matriciel (111) en un signal série ; et
un démodulateur (16) correspondant au modulateur et un décodeur (17) correspondant au codeur du côté du dispositif de transmission pour la sortie dudit convertisseur parallèle/série (15).

**10.** Dispositif de réception pour un signal multi-porteuse selon la revendication 9, dans lequel la longueur de la transformation de Fourier discrète dans ledit transformateur de Fourier correspond à la longueur desdits 2N symboles de données du signal multi-porteuse sélectionné.

**11.** Dispositif de réception pour un signal multi-porteuse selon la revendication 9, dans lequel l'égalisation de voie effectuée par ledit compensateur de voie est réalisée en multipliant les coefficients d'égalisation par le signal multi-porteuse et en diminuant ainsi l'effet de distorsion de voie dudit signal multi-porteuse reçu dans la région des fréquences.

**12.** Dispositif de réception pour un signal multi-porteuse selon la revendication 9, dans lequel on utilise un multiplexage par répartition orthogonale de la fréquence dans ledit système multi-porteuse.

**13.** Dispositif de réception pour un signal multi-porteuse selon la revendication 9, dans lequel on utilise un accès multiple par répartition en code multi-porteuse dans ledit système multi-porteuse.

**14.** Dispositif de réception pour un signal multi-porteuse selon l'une quelconque des revendications 9 à 13, dans lequel ledit signal multi-porteuse reçu ne comporte pas d'intervalles de protection entre des trames de symboles adjacentes.

**15.** Dispositif de réception pour un signal multi-porteuse selon la revendication 9, dans lequel la transformation de Fourier discrète d'une longueur supérieure aux dimensions du signal multi-porteuse est d'une longueur qui est un multiple entier des dimensions dudit signal multi-porteuse.

**16.** Dispositif de réception pour un signal multi-porteuse selon la revendication 15, dans lequel on trouve les valeurs estimées de la réponse de voie par rapport à ladite sortie ayant fait l'objet d'une transformation de Fourier discrète de chaque voie par interpolation des valeurs estimées de dimensions réduites.

# FIG. 1

EP 1 603 259 B1

# FIG. 2

EP 1 603 259 B1

FIG. 3

DATA → ENCODING (2) → MODULATION (3) → S/P (4) → IFFT(N) (7) → P/S (8) → GI (9) →

N

EP 1 603 259 B1

# FIG. 4

EP 1 603 259 B1

FIG. 5

EP 1 603 259 B1

# FIG. 6

| | j−1 | | j | | j+1 | D1 |

| j−2 | | j−1 | | j | |

2N points

⬇ 2N points FFT · S1

| FFT(j−1, j) | D2 |

⬇ CHANNEL COMPENSATION | S2

| FFT(j−1, j)/H(2N) | D3 |

⬇ 2N points IFFT · S3

| j−1 | j | D4 |

⬇ N points FFT | S4

| FFT(j) | D5 |

FIG. 7

# FIG. 8

| GI | $(j-1)^{th}$ OFDM symbol | | GI | $j^{th}$ OFDM symbol | | GI | $(j+1)^{th}$ OFDM symbol | |

*GI*

2N-points

*GI*

2N-points

FIG. 9

| P | P | D | D | D | ---------------------------- | D | D | D | P | P |

## FIG. 10

# FIG. 11

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5416767 A, Philips; Koppelaar

- WO 0038387 A, Ericsson; R Baldemair

**Non-patent literature cited in the description**

- **R. Van Nee ; R. Prasad.** OFDM For Wireless Multimedia Communications. Artech House Publishers, 2000